# EUROPÄISCHE PATENTSCHRIFT

(11) **EP 3 165 431 B1**
(45) Veröffentlichungstag und Bekanntmachung des Hinweises auf die Patenterteilung: **11.07.2018**
(21) Anmeldenummer: 16002219.0
(22) Anmeldetag: 14.10.2016
(51) Int. Cl.: B62D 29/04, B29C 65/70, B29C 65/00, B29C 45/00, B32B 1/08, B62D 21/15, B62D 23/00

(54) **KNOTENSTRUKTUR MIT WENIGSTENS EINEM DOPPELWANDIGEN HOHLPROFILBAUTEIL, VERFAHREN ZUR HERSTELLUNG UND FAHRZEUGKAROSSERIE**
NODE STRUCTURE WITH AT LEAST ONE DOUBLE-WALLED HOLLOW PROFILE COMPONENT, METHOD FOR PREPARATION AND VEHICLE BODY
STRUCTURE DE LIAISON COMPRENANT AU MOINS UN COMPOSANT EN CORPS CREUX À DOUBLE PAROI, PROCÉDÉ DE FABRICATION ET CARROSSERIE DE VÉHICULE

(30) Priorität: 06.11.2015 DE 102015014356
(43) Veröffentlichungstag der Anmeldung: 10.05.2017
(73) Patentinhaber: AUDI AG, 85045 Ingolstadt (DE)
(72) Erfinder: EIDMANN, Florian, DE - 74613 Öhringen (DE); STOLL, Oliver, DE - 69429 Waldbrunn (DE)
(74) Vertreter: Eickmeyer, Dietmar

(56) Entgegenhaltungen:
- DE-C1- 4 423 642
- US-A1- 2010 083 815
- US-A1- 2014 193 192

## Beschreibung

Die Erfindung betrifft eine Knotenstruktur für eine Fahrzeugkarosserie, mit wenigstens zwei Profilbauteilen und einem Verbindungsknoten, der die Profilbauteile an knötenseitigen Profilenden verbindet.

Die Erfindung betrifft ferner ein Verfahren zur Herstellung einer solchen Knotenstruktur und eine Fahrzeugkarosserie.

Aus dem Stand der Technik sind Karosserieaufbauten für Kraftfahrzeuge, insbesondere Personenkraftwagen, bekannt, die aus einzelnen vorgefertigten Profilbauteilen gebildet sind, wobei die Profilbauteile an sogenannten Knotenstellen mittels Verbindungsknoten gefügt bzw. miteinander verbunden sind. Zum Stand der Technik wird bspw. auf die Patentschriften DE 102 56 608 A1, DE 10 2014 209 991 A1 und DE 10 2007 027 593 A1 hingewiesen. Ferner werden für derartige Karosserieaufbauten mit einem aus Profilbauteilen gebildeten Rahmen oder Rahmenabschnitt auch aus Faserkunststoffverbund gebildete Profilbauteile verwendet, wodurch sich mitunter erhebliche Gewichtseinsparungen erzielen lassen. Zum diesbezüglichen Stand der Technik wird bspw. auf die Patentschriften DE 44 23 642 C1, DE 10 2013 226 607 A1 und DE 10 2013 220 209 A1 hingewiesen.

Die US 2010/0083815 A1 beschreibt ein faserverstärktes Kunststoffbauteil, das bspw. als A-Säule verwendet wird, und ein Herstellverfahren. Das faserverstärkte Kunststoffbauteil weist einen hohlen Kunststoffkern und mehrere darauf abgelegte Wickellagen, die aus Garn gebildet und mit Kunststoff imprägniert sind, auf.

Die US 2014/0193192 A1 beschreibt ein Verfahren zum Herstellen einer Verbindungsstruktur für einen Kraftwagen, bei welchem wenigstens zwei Profilelemente in ein Werkzeug eingelegt und durch Herstellen eines Kunststoffknotenelements mittels Spritzpressprozess miteinander verbunden werden.

Der Erfindung liegt die Aufgabe zugrunde, eine Knotenstruktur eingangs genannter Art anzugeben, die verbesserte Eigenschaften und insbesondere verbesserte Crasheigenschaften aufweist.

Diese Aufgabe wird gelöst durch eine erfindungsgemäße Knotenstruktur mit den Merkmalen des Patentanspruchs 1. Mit einem nebengeordneten Patentanspruch erstreckt sich die Erfindung auch auf ein erfindungsgemäßes Verfahren zur Herstellung einer erfindungsgemäßen Knotenstruktur. Mit einem weiteren nebengeordneten Patentanspruch erstreckt sich die Erfindung auch auf eine erfindungsgemäße Fahrzeugkarosserie, insbesondere für einen Personenkraftwagen, die wenigstens eine erfindungsgemäße Knotenstruktur umfasst. Bevorzugte Weiterbildungen und Ausgestaltungen der Erfindung ergeben sich analog für alle Erfindungsgegenstände aus den abhängigen Patentsprüchen, der nachfolgenden Beschreibung und den Figuren.

Die erfindungsgemäße Knotenstruktur zeichnet sich dadurch aus, dass wenigstens eines der Profilbauteile ein doppelwandiges Hohlprofilbauteil ist, welches ein Innenrohr und ein Außenrohr aufweist, wobei sich im Zwischenraum zwischen dem Innenrohr und dem Außenrohr ein Vliesmaterial befindet.

Besonders bevorzugt sind alle zu einer erfindungsgemäßen Knotenstruktur gehörenden Profilbauteile derart ausgebildet, wobei sich die gleichartige Ausbildung auch auf die im Folgenden erläuterten Weiterbildungen und Ausgestaltungen erstrecken kann.

Unter einem Hohlprofilbauteil wird ein rohrartiges Profilbauteil mit geschlossenem Querschnitt (Hohlprofil) und mit wenigstens einer Profilkammer verstanden. Erfindungsgemäß weist dieses Hohlprofilbauteil ein Innenrohr bzw. eine Innenwand und ein Außenrohr bzw. eine Außenwand auf und eine dazwischen befindliche Zwischenlage aus einem Vliesmaterial. Unter einem Vliesmaterial wird insbesondere ein Gebilde aus orientierungslosen Fasern mit begrenzter Länge verstanden. Bevorzugt ist das Vliesmaterial aus Kurzfasern (bspw. Kohlenstoff-, Glas-, Kunst-, Mineral- oder Mischfasern) gebildet, die z. B. eine Länge von 1 mm bis 100 mm, bevorzugt von 2 mm bis 50 mm und insbesondere von 3 mm bis 25 mm aufweisen können. (Die Fasern können auch unterschiedliche Faserlängen aufweisen, so dass gegebenenfalls von einer mittleren Faserlänge auszugehen ist.)

Ein doppelwandiges Hohlprofilbauteil mit Vlieszwischenlage kann selbst bei kleineren Außenabmessungen (Durchmesser) und trotz geringen Gewichts eine hohe Steifigkeit und Festigkeit (insbesondere Druck-, Biege- und Torsionssteifigkeit bzw. -festigkeit) aufweisen, wodurch die Knotenstruktur bspw. sehr belastbar, verformungsarm und/oder verwindungssteif ist. Ferner wird bspw. die Crashstabilität und das Energieabsorptionsvermögen der Knotenstruktur verbessert. Zudem können Materialien bzw. Werkstoffe mit sehr unterschiedlichen Eigenschaften kombiniert werden, um dadurch zielgerichtet die Belastbarkeit und insbesondere die Crashbelastbarkeit bei einem Fahrzeugunfall (Crasheigenschaften bzw. Crashperformance) einzustellen. Zudem kann auch die Schall- und Schwingungsabsorption sowie gegebenenfalls auch das Brandverhalten verbessert sein. Dies ist keine abschließende Aufzählung von Vorteilen, die mit der Erfindung einhergehen.

Das Außenrohr und/oder das Innenrohr kann/können aus einem Faserkunststoffverbund (FKV) bzw. einem Faserkunststoffverbundmaterial gebildet sein. Unter einem Faserkunststoffverbundmaterial wird ein konsolidierter und ausgehärteter Faserkunststoffverbundwerkstoff aus einer Kunststoffmatrix und Verstärkungsfasern verstanden. Bei dem Kunststoffmaterial (Matrix) kann es sich um einen duroplastischen oder auch thermoplastischen Kunststoff handeln. Bei den Verstärkungsfasern kann es sich bspw. um Kohlenstoff-, Glas-, Kunst- oder Mischfasern handeln. Bevorzugt handelt es sich um sogenannte Endlosfasern. Die Rohre können bspw. durch Pultrusion bzw. im Strangziehverfahren hergestellt sein. Ebenso können die Rohre geflochten oder gewickelt sein. Die Rohre können aus unterschiedlichen Faserkunststoffverbundmaterialien gebildet sein. Ferner können die Rohre eine gleiche oder unterschiedliche Wandstärke von 0,6 mm bis 10,0 mm, bevorzugt von 2,0 mm bis 8,0 mm und insbesondere von 3,0 mm bis 7,0 mm aufweisen.

Der Verbindungsknoten ist bevorzugt aus faserverstärktem Kunststoff gebildet. Bei dem Kunststoffmaterial (Matrix) kann es sich um einen duroplastischen oder auch thermoplastischen Kunststoff handeln. Bei den Verstärkungsfasern kann es sich bspw. um Kohlenstoff-, Glas-, Kunst- oder Mischfasern handeln. Bevorzugt handelt es sich um Kurzfasern, die eine Länge von 1 mm bis 100 mm, bevorzugt von 2 mm bis 50 mm und insbesondere von 3 mm bis 25 mm aufweisen können.

Bei den Fasern des Vliesmaterials und/oder bei den Fasern des den Verbindungsknoten bildenden faserverstärkten Kunststoffs kann es sich um Recyclingfasern handeln. Bspw. handelt es sich um Glas- oder Kohlenstofffasern, die durch Aufbereitung von Schnittabfällen aus anderen Prozessen gewonnen und somit einer weiteren Verwendung zugeführt werden.

Die Hohlprofilbauteile sind an ihren knotenseitigen Profilenden durch Einbindung in die faserverstärkte und insbesondere kurzfaserverstärkte Kunststoffmasse form- und gegebenenfalls auch stoffschlüssig verbunden. Der Verbindungsknoten ist somit ein Verbindungselement. Wenigstens zwei der im Verbindungsknoten verbundenen Profilbauteile können, zumindest an ihren knotenseitigen Endabschnitten, unterschiedliche Querschnitte bzw. Querschnittsabmessungen aufweisen und/oder mit unterschiedlichen Wandstärken ausgebildet sein.

Das erfindungsgemäße Verfahren zur Herstellung einer erfindungsgemäßen Knotenstruktur umfasst zumindest die folgenden Schritte:
- Bereitstellen der vorgefertigten Profilbauteile, wobei wenigstens eines der Profilbauteile ein doppelwandiges Hohlprofilbauteil mit einem im Zwischenraum befindlichen Vliesmaterial ist (bevorzugt sind alle Profilbauteile derartige Hohlprofilbauteile);
- Verschließen des offenen Profilendes am Hohlprofilbauteil (bzw. an allen Hohlprofilbauteilen) durch ein Verschlusselement;
- Positionieren der Profilenden in einem den Verbindungsknoten erzeugenden Presswerkzeug;
- Ausführen eines Pressvorgangs unter Zugabe von faserhaltiger Kunststoffmasse zur Erzeugung eines die Profilenden verbindenden Verbindungsknotens, wobei das Verschlusselement (bzw. die Verschlusselemente) ein Eindringen der faserhaltigen Kunststoffmasse in das Hohlprofilbauteil (bzw. in die Hohlprofilbauteile) verhindert.

Das Bereitstellen der Profilbauteile umfasst z. B. das Konfektionieren (bspw. durch Ablängen eines Stangenmaterials), das Herrichten, das Reinigen und/oder das Prüfen der im Weiteren zu verbindenden Profilbauteile. Das Bereitstellen umfasst gegebenenfalls auch das Erzeugen von Stoßflächen (s. u.).

Das Verschlusselement ist insbesondere aus einem Kunststoffsschaummaterial bzw. Kunstschaumstoff gebildet und verschließt stopfen- bzw. pfropfartig ein offenes Profilende. Bei dem Kunststoffsschaummaterial handelt es sich insbesondere um einen hitzebeständigen und druckfesten, vorzugsweise geschlossenzelligen, Hartschaum bzw. Hartschaumstoff, bspw. auf PMI-Basis (Polymethacrylimid) oder auf PU-Basis (Polyurethan). Das aus Kunststoffschaummaterial gebildete Verschlusselement kann bspw. aus einem vorgefertigten Schaummaterial (insbesondere ein Schaumhalbzeug, wie bspw. eine Hartschaumplatte oder dergleichen) hergestellt und in das offene Profilende eingeklebt werden. Eine andere Möglichkeit besteht darin, das offene Profilende auszuschäumen und dadurch stopfen- bzw. pfropfartig zu verschließen. Die Verschlusstiefe des pfropf- bzw. stopfenartigen Verschlusselements (damit ist die Einsteck-, Einkleb- oder Einschäumtiefe gemeint) kann 10 mm bis 100 mm, bevorzugt 20 mm bis 80 mm, besonders bevorzugt 40 mm bis 60 mm und insbesondere ca. 50 mm betragen.

Die den Verbindungsknoten bildende faserverstärkte und insbesondere kurzfaserverstärkte Kunststoffmasse kann vor dem Schließen des Presswerkzeugs oder gegebenenfalls auch erst nach dem Schließen des Presswerkzeugs (Spritzpressen) in die Werkzeugkavität eingebracht werden.

Die knotenseitigen Profilenden sind bevorzugt mit korrespondierenden Stoßflächen ausgebildet und werden derart im Presswerkzeug positioniert, dass zwischen den Stoßflächen ein homogener (d. h. im Wesentlichen konstant breiter) Beabstandungsspalt besteht, der während des Pressvorgangs mit der faserhaltigen Kunststoffmasse aufgefüllt wird, wobei das wenigstens eine Verschlusselement das Eindringen in das wenigstens eine Hohlprofilbauteil verhindert. Der Beabstandungsspalt weist ein bevorzugtes Spaltmaß von wenigstens 0,5 mm und höchstens 2 mm auf.

Die erfindungsgemäße Fahrzeugkarosserie zeichnet sich dadurch aus, dass diese einen aus Profilbauteilen gebildeten Rahmen (bspw. ein Space-Frame-Rahmen) oder Rahmenabschnitt (bspw. eine Vorderwagen-, Mittelwagen-oder Hinterwagenstruktur) aufweist, der wenigstens eine erfindungsgemäße Knotenstruktur und/oder eine mit dem erfindungsgemäßen Verfahren hergestellte Knotenstruktur umfasst.

Die Erfindung wird nachfolgend beispielhaft und in nicht einschränkender Weise anhand der schematischen Figuren näher erläutert. Die in den Figuren gezeigten und/oder nachfolgend erläuterten Merkmale können, auch losgelöst von konkreten Merkmalskombinationen, allgemeine Merkmale der Erfindung sein und die Erfindung weiterbilden.
- Fig. 1: zeigt in einer perspektivischen Ansicht einen aus Hohlprofilbau-teilen gebildeten Rahmenabschnitt einer Kraftfahrzeugkarosse-rie.
- Fig. 2: zeigt in einer perspektivischen Darstellung eine zum Rahmenab-schnitt der Fig. 1 gehörende Knotenstruktur mit einem Verbin-dungsknoten.
- Fig. 3: veranschaulicht in mehreren Schnittdarstellungen die Herstellung des Verbindungsknotens aus Fig. 2.

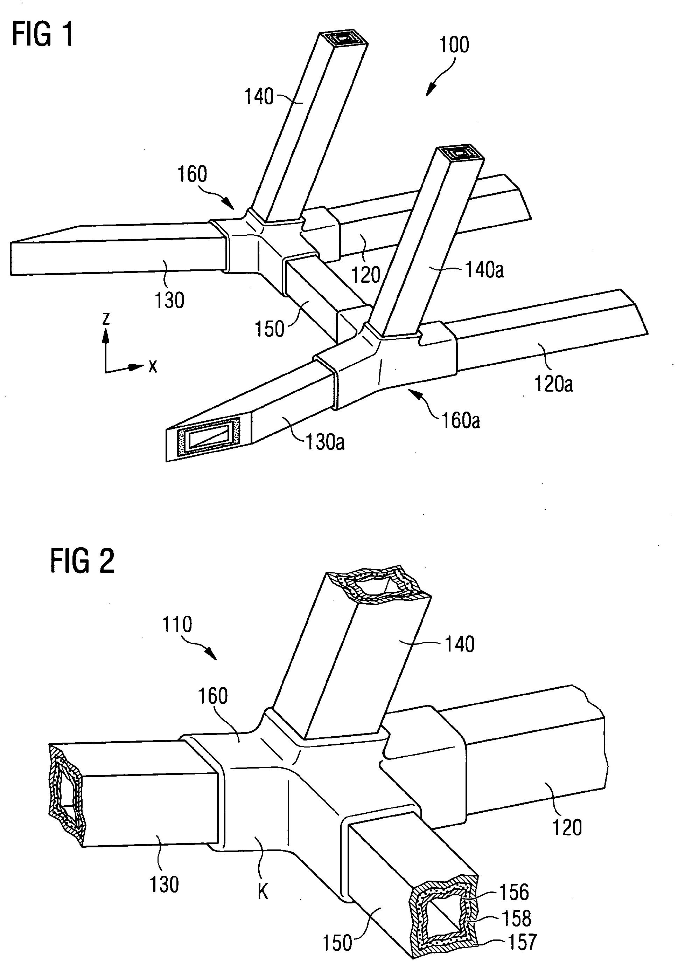

Bei dem in Fig. 1 gezeigten Rahmenabschnitt 100 handelt es sich um eine Hinterwagenstruktur, die Teil eines Rahmens (z. B. eines Space-Frame-Rahmens) einer PKW-Fahrzeugkarosserie ist. Der Rahmenabschnitt bzw. die Hinterwagenstruktur 100 umfasst mehrere getrennt voneinander vorgefertigte Hohlprofilbauteile 120, 120a, 130, 130a, 140, 140a und 150, die an Verbindungsknoten 160 und 160a fest verbunden sind. Die Profilbauteile 120, 120a, 130, 130a, 140, 140a und/oder 150 können auch eine andere Querschnittsform aufweisen. Die Hinterwagenstruktur 100 kann ferner offene Profilbauteile (bspw. U-Profile oder T-Profile) und/oder Vollprofilbauteile aufweisen, wobei auch solche Profilbauteile über die Verbindungsknoten 160 bzw. 160a in die Rahmenstruktur 100 eingebunden sein können.

Die in einem Verbindungsknoten 160 bzw. 160a verbundenen Hohlprofilbauteile bilden zusammen mit diesem Verbindungsknoten eine Knotenstruktur im Sinne der Erfindung. Fig. 2 zeigt in einer perspektivischen Darstellung eine solche Knotenstruktur 110 für den in Fahrtrichtung x links liegenden Rahmenbereich. Die integrale Knotenstruktur 110 umfasst mehrere Hohlprofilbauteile 120, 130, 140 und 150, die an knotenseitigen Profilenden im Verbindungsknoten 160 fest miteinander verbunden sind. Der Verbindungsknoten 160 ist aus faserverstärktem Kunststoff K gebildet.

Bei den im Verbindungsknoten 160 gefügten Profilbauteilen 120, 130, 140 und 150 handelt es sich um doppelwandige Hohlprofilbauteile mit einer Vlieszwischenlage. Die ist gut an dem einen Querträger bildenden Profilbauteil 150 erkennbar, das ein Innenrohr 156 und ein Außenrohr 157 aufweist, wobei sich im Zwischenraum zwischen dem Innenrohr 156 und dem Außenrohr 157 ein Vliesmaterial bzw. eine Vlieszwischenlage 158 befindet. Sowohl das Innenrohr 156 als auch das Außenrohr 157 sind aus Faserkunststoffverbundmaterial (bspw. CFK oder GFK), insbesondere mit Endlosfasern, gebildet. Die Zwischenlage 158 ist aus Kurzfasern (bspw. Kohlenstoff-, Glas-, Kunst-, Mineral- oder Mischfasern) gebildet, wobei es sich insbesondere um Recyclingfasern handelt.

Die Hinterwagenstruktur 100 besitzt trotz eines geringen Gewichts eine hervorragende Festigkeit, Steifigkeit und Crashstabilität. Die Hohlprofilbauteile 120, 120a, 130, 130a, 140, 140a und 150 sind bspw. aus vorgefertigten Halbzeugen hergestellt, die z. B. von einem Zulieferer bezogen werden.

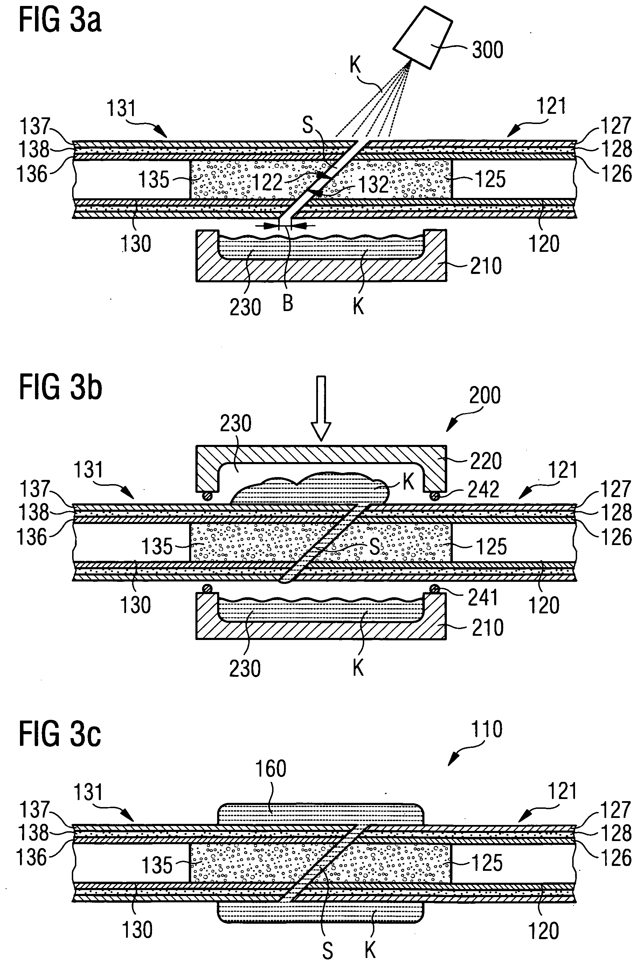

Nachfolgend wird unter Bezug auf die Fig. 3 die Herstellung des Verbindungsknotens 160 erläutert. In nicht einschränkender Weise wird dabei zum Zwecke einer vereinfachenden Darstellung und Beschreibung nur auf die Verbindung der beiden Hohlprofilbauteile 120 und 130 eingegangen.

Fig. 3 zeigt die knotenseitigen Profilenden 121 und 131 der beiden mittels Verbindungsknoten 160 zu verbindenden Hohlprofilbauteile 120 und 130. Die Hohlprofilbauteile 120 und 130 weisen analog zu den vorausgehenden Erläuterungen jeweils ein Innenrohr 126 bzw. 136, ein Außenrohr 127 bzw. 137 und eine aus Vliesmaterial 128 bzw. 138 gebildete Zwischenlage auf. Anders als dargestellt können die zu verbindenden Hohlprofilbauteile 120 und 130 oder zumindest deren Profilenden 121 und 131 unterschiedliche Querschnitte aufweisen.

Die knotenseitigen Profilenden 121 und 131 der zu verbindenden Hohlprofilbauteile 120 und 130 sind mittels pfropf- bzw. stopfenartiger Verschlusselemente 125 und 135 verschlossen. Die Verschlusselemente 125 und 135 sind aus einem Kunststoffschaummaterial, insbesondere einem temperatur- und druckbeständigen Hartschaum, gebildet und bspw. eingeklebt. Zudem sind die knotenseitigen Profilenden 121 und 131 mit korrespondierenden Stoßflächen 122 und 132 ausgebildet. Bei der in Fig. 3 gezeigten Ausführungsmöglichkeit sind diese Stoßflächen 122 und 132 lediglich beispielhaft als gerade Schrägflächen gestaltet. Die korrespondierenden Stoßflächen 122 und 132 können aber bspw. auch als konkave und konvexe Flächen (oder zumindest mit konkaven oder konvexen Flächenanteilen), als gewellte Flächen, als gestufte Flächen und/oder als verschachtelbare Flächen ausgebildet sein.

Zur Erzeugung des Verbindungsknotens 160 werden die Profilenden 121 und 131 der Hohlprofilbauteile 120 und 130 in ein den Verbindungsknoten 160 erzeugendes Presswerkzeug 200 eingelegt, wie in Fig. 3a gezeigt. Das Presswerkzeug 200 ist so ausgebildet, dass eine lagegenaue Fixierung der Profilenden 121 und 131 ermöglicht wird, wobei zwischen den Stoßflächen 122 und 132 ein homogener Beabstandungsspalt S besteht. Die Spaltbreite B des Beabstandungsspalts S beträgt bspw. 0,5 mm bis 2,0 mm.

In der Werkzeugkavität 230 des Werkzeugunterteils 210 befindet sich eine bereits vor dem Positionieren der Profilenden 121 und 131 eingebrachte kurzfaserhaltige bzw. Kurzfasern enthaltende Kunststoffmasse K, insbesondere mit duroplastischer Matrix (Harz). Nach dem Positionieren der zu verbindenden Profilenden 121 und 131 wird auf den Verbindungsbereich weitere kurzfaserhaltige Kunststoffmasse K aufgebracht, bspw. mithilfe der gezeigten Sprühvorrichtung 300 aufgespritzt.

Anschließend wird das Presswerkzeug 200 durch Absenken des Werkzeugoberteils 220 geschlossen, wie in Fig. 3b gezeigt, und ein Pressvorgang ausgeführt. Bei diesem Pressvorgang verteilt sich die definierte Menge der Kurzfasern enthaltenden Kunststoffmasse K in der Kavität 230. Hierbei werden die in der Kavität 230 angeordneten Profilenden 121 und 131 der Hohlprofilbauteile 120 und 130 formschlüssig umformt (gegebenenfalls kann sich auch eine stoffschlüssige Verbindung ausbilden), wobei die kurzfaserhaltige Kunststoffmasse K auch in den Beabstandungsspalt S hinein gedrückt wird. Die Verschlusselemente 125 und 135 wirken als Barrieren und verhindern das Eindringen der faserhaltigen Kunststoffmasse K in die Profilkammern der Hohlprofilbauteile 120 und 130, wodurch sich u. a. in der Werkzeugkavität 230 ein ausreichend hoher Formungsdruck aufbauen kann.

Bei der faserhaltigen Kunststoffmasse K kann es sich bspw. um SMC- oder BMC-Masse handeln. Eine alternative Verfahrensvariante sieht vor, dass die faserhaltige Kunststoffmasse K erst während des Pressvorgangs oder kurz davor in die Kavität 230 eingespritzt wird, was auch als Spritzpressen, ähnlich dem RTM-Verfahren, bezeichnet werden kann.

Bei der Erzeugung des Verbindungsknotens 160 werden nur die zu verbindenden Profilenden 121 und 131 in das Presswerkzeug 200 eingelegt, so dass die Hohlprofilbauteile 120 und 130 durch Öffnungen im Presswerkzeug 200 in die Werkzeugkavität 230 hineinragen. Während des Pressvorgangs wird die Abdichtung der Werkzeugkavität 230 mithilfe von Dichtungen 241 und 242 bewerkstelligt. Die Verschlusstiefe der druckfesten Verschlusselemente 125 und 135 ist so bemessen, dass diese wenigstens bis in den durch die Werkzeugdichtungen 241 und 242 gebildeten Werkzeugdichtungsbereich hineinreichen und dabei eine Stabilisierung der Hohlprofilwandungen bewirken und die Kavitätsabdichtung verbessern. Mit den in der herzustellenden Knotenstruktur 110 verbleibenden Verschlusselementen 125 und 135 wird auch dauerhaft ein innerer Abstützungseffekt erzielt und dadurch die Crashbelastbarkeit der Knotenstruktur 110 gesteigert.

Nachdem die Kunststoffmasse K infolge von Druck- und Temperatureinwirkung ausgehärtet ist, kann das Presswerkzeug 200 geöffnet und die hergestellte Knotenstruktur 110 entnommen werden, wie in Fig. 3c gezeigt. Die Wandstärke des erzeugten Verbindungsknotens 160 kann im Bereich von 1 mm bis 15 mm, insbesondere von 4 mm bis 10 mm, liegen, wobei sowohl gleiche als auch unterschiedliche Wandstärken vorgesehen sein können.

## Patentansprüche

1. Knotenstruktur (110) für eine Fahrzeugkarosserie, mit wenigstens zwei Profilbauteilen (120, 130) und einem Verbindungsknoten (160), der die Profilbauteile (120, 130) an knotenseitigen Profilenden (121, 131) verbindet,
**dadurch gekennzeichnet, dass**
wenigstens eines der Profilbauteile (120, 130) ein doppelwandiges Hohlprofilbauteil ist, das ein Innenrohr (126, 136) und ein Außenrohr (127, 137) aufweist, wobei sich im Zwischenraum zwischen dem Innenrohr (126, 136) und dem Außenrohr (127, 137) ein Vliesmaterial (128, 138) befindet.

2. Knotenstruktur (110) nach Anspruch 1,
**dadurch gekennzeichnet, dass**
das Innenrohr (126, 136) und/oder das Außenrohr (127, 137) aus einem Faserkunststoffverbundmaterial gebildet ist/sind.

3. Knotenstruktur (110) nach Anspruch 2,
**dadurch gekennzeichnet, dass**
es sich bei den Fasern des Faserkunststoffverbundmaterials um Endlosfasern handelt.

4. Knotenstruktur (110) nach einem der vorausgehenden Ansprüche,
**dadurch gekennzeichnet, dass**
das Vliesmaterial (128, 138) aus Kurzfasern gebildet ist.

5. Knotenstruktur (110) nach einem der vorausgehenden Ansprüche,
**dadurch gekennzeichnet, dass**
der Verbindungsknoten (160) aus faserverstärktem Kunststoff (K) gebildet ist.

6. Knotenstruktur (110) nach Anspruch 4 oder 5,
**dadurch gekennzeichnet, dass**
es sich bei den Fasern des Vliesmaterials (128, 138) und/oder bei den Fasern des faserverstärkten Kunststoffs (K) um Recyclingfasern handelt.

7. Knotenstruktur (110) nach einem der vorausgehenden Ansprüche,
**dadurch gekennzeichnet, dass**
wenigstens zwei der im Verbindungsknoten (160) miteinander verbundenen Profilbauteile unterschiedliche Querschnitte aufweisen.

8. Verfahren zur Herstellung einer Knotenstruktur (110) gemäß einem der vorausgehenden Ansprüche, mit den Schritten:
- Bereitstellen der vorgefertigten Profilbauteile (120, 130), wobei wenigstens eines der Profilbauteile (120, 130) ein doppelwandiges Hohlprofilbauteil mit einem im Zwischenraum befindlichen Vliesmaterial (128, 138) ist;
- Verschließen des offenen Profilendes (121, 131) am Hohlprofilbauteil (120, 130) durch ein Verschlusselement (125, 135);
- Positionieren der Profilenden (121, 131) in einem den Verbindungsknoten (160) erzeugenden Presswerkzeug (200);
- Ausführen eines Pressvorgangs unter Zugabe von faserhaltiger Kunststoffmasse (K) zur Erzeugung des die Profilenden (121, 131) verbindenden Verbindungsknotens (160), wobei das Verschlusselement (125, 135) ein Eindringen der faserhaltigen Kunststoffmasse (K) in das Hohlprofilbauteil (120, 130) verhindert.

9. Verfahren nach Anspruch 8,
**dadurch gekennzeichnet, dass**
die zu verbindenden Profilenden (121, 131) mit korrespondierenden Stoßflächen (122, 132) ausgebildet sind und derart im Presswerkzeug (200) positioniert werden, dass zwischen den Stoßflächen (122, 132) ein homogener Beabstandungsspalt (S) besteht, der während des Pressvorgangs mit der faserhaltigen Kunststoffmasse (K) aufgefüllt wird.

10. Fahrzeugkarosserie, insbesondere für einen Personenkraftwagen, mit einem aus Profilbauteilen (120, 130, 140, 150) gebildeten Rahmen oder Rahmenabschnitt (100), der wenigstens eine Knotenstruktur (110) aufweist, die gemäß einem der Ansprüche 1 bis 7 ausgebildet ist.

## Claims

1. Node structure (110) for a vehicle body, with at least two profile components (120, 130) and a connecting node (160), which connects the profile components (120, 130) on node-side profile ends (121, 131), **characterised in that** at least one of the profile components (120, 130) is a double-walled hollow profile component, having an inner tube (126, 136) and an outer tube (127, 137), with a nonwoven material (128, 138) located in the intermediate space between the inner tube (126, 136) and the outer tube (127, 137).

2. Node structure (110) according to claim 1, **characterised in that** the inner tube (126, 136) and/or the outer tube (127, 137) is/are formed from a fibre-plastic composite material.

3. Node structure (110) according to claim 2, **characterised in that** the fibres of the fibre-plastic composite material are continuous fibres.

4. Node structure (110) according to any one of the preceding claims, **characterised in that** the nonwoven material (128, 138) is formed from short fibres.

5. Node structure (110) according to any one of the preceding claims, **characterised in that** the connecting node (160) is formed from fibre-reinforced plastic (K).

6. Node structure (110) according to claim 4 or 5, **characterised in that** the fibres of the nonwoven material (128, 138) and/or the fibres of the fibre-reinforced plastic (K) are recycled fibres.

7. Node structure (110) according to any one of the preceding claims, **characterised in that** at least two of the profile components connected together in the connecting node (160) have different cross-sections.

8. Method for preparation of a node structure (110) in accordance with any one of the preceding claims, with the steps:
- provision of the prefabricated profile components (120, 130), with at least one of the profile components (120, 130) being a double-walled hollow profile component with a nonwoven material (128, 138) located in the intermediate space;
- closing of the open profile end (121, 131) of the hollow profile component (120, 130) by means of a closing element (125, 135);
- positioning of the profile ends (121, 131) in a pressing tool (200) that produces the connecting node (160);
- performing of a pressing process with the addition of fibre-containing polymer melt (K) to produce the connecting node (160) connecting the profile ends (121, 131), wherein the closing element (125, 135) prevents any penetration of the fibre-containing polymer melt (K) into the hollow profile component (120, 130).

9. Method according to claim 8, **characterised in that** the profile ends (121, 131) to be connected are configured with corresponding abutting surfaces (122, 132) and are positioned in the pressing tool (200), such that a homogeneous spacing gap (S) exists between the abutting surfaces (122, 132), said spacing gap being filled up with the fibre-containing polymer melt (K) during the pressing process.

10. Vehicle body, more particularly for a passenger car, with a frame or frame portion (100) formed from profile components (120, 130, 140, 150), which has at least one node structure (110) configured in accordance with any one of claims 1 to 7.

## Revendications

1. Structure nodale (110) pour une carrosserie de véhicule, avec au moins deux pièces profilées (120, 130) et un noeud de liaison (160) qui relie les pièces profilées (120, 130) au niveau d'extrémités de profilé (121, 131) côté noeud,
**caractérisée en ce qu'au** moins l'une des pièces profilées (120, 130) est une pièce profilée creuse à double paroi qui comporte un tube intérieur (126, 136) et un tube extérieur (127, 137), un matériau non tissé (128, 138) se trouvant dans l'espace intermédiaire entre le tube intérieur (126, 136) et le tube extérieur (127, 137).

2. Structure nodale (110) selon la revendication 1, **caractérisée en ce que** le tube intérieur (126, 136) et/ou le tube extérieur (127, 137) sont formés à partir d'un matériau composite de plastique renforcé par des fibres.

3. Structure nodale (110) selon la revendication 2, **caractérisée en ce que** les fibres du matériau composite de plastique renforcé par des fibres sont des filaments.

4. Structure nodale (110) selon l'une quelconque des revendications précédentes, **caractérisée en ce que** le matériau non tissé (128, 138) est formé à partir de fibres courtes.

5. Structure nodale (110) selon l'une quelconque des revendications précédentes, **caractérisée en ce que** le noeud de liaison (160) est formé à partir de plastique (K) renforcé par des fibres.

6. Structure nodale (110) selon la revendication 4 ou 5, **caractérisée en ce que** les fibres du matériau non tissé (128, 138) et/ou les fibres du plastique (K) renforcé par des fibres sont des fibres recyclées.

7. Structure nodale (110) selon l'une quelconque des revendications précédentes, **caractérisée en ce qu'**au moins deux des pièces profilées reliées entre elles dans le noeud de liaison (160) ont des sections transversales différentes.

8. Procédé de fabrication d'une structure nodale (110) selon l'une quelconque des revendications précédentes, avec les étapes :
- fourniture des pièces profilées préfabriquées (120, 130), au moins l'une des pièces profilées (120, 130) étant une pièce profilée creuse à double paroi avec un matériau non tissé (128, 138) se trouvant dans l'espace intermédiaire ;
- fermeture de l'extrémité de profilé ouverte (121, 131) au niveau de la pièce profilée creuse (120, 130) par un élément de fermeture (125, 135) ;
- placement des extrémités de profilé (121, 131) dans un outil de presse (200) produisant le noeud de liaison (160) ;
- exécution d'une opération de presse avec ajout d'une masse plastique (K) contenant des fibres afin de produire le noeud de liaison (160) reliant les extrémités de profilé (121, 131), l'élément de fermeture (125, 135) empêchant que la masse de plastique (K) contenant des fibres ne pénètre dans la pièce profilée creuse (120, 130).

9. Procédé selon la revendication 8, **caractérisé en ce que** les extrémités de profilé à relier (121, 131) sont réalisées avec des surfaces d'about (122, 132) correspondantes et sont placées de telle sorte dans l'outil de presse (200) qu'il existe entre les surfaces d'about (122, 132) une fente d'écartement (S) homogène qui est remplie avec la masse de plastique (K) contenant des fibres pendant l'opération de presse.

10. Carrosserie de véhicule, en particulier pour une voiture particulière, avec un châssis ou un tronçon de châssis (100) qui est formé de pièces profilées (120, 130, 140, 150) et qui comporte au moins une structure nodale (110) réalisée selon l'une quelconque des revendications 1 à 7.
